# EUROPÄISCHE PATENTANMELDUNG

(11) **EP 4 607 309 A1**
(43) Veröffentlichungstag der Anmeldung: **27.08.2025**
(21) Anmeldenummer: 24159317.7
(22) Anmeldetag: 23.02.2024
(51) Int. Cl.: G05D 1/24

(54) **VERFAHREN ZUR POSITIONSBESTIMMUNG EINES ARBEITSFAHRZEUGS IN EINER SILOANLAGE**

(71) Anmelder: Deere & Company, Moline, IL 61265 (US)
(72) Erfinder: BROCKE, STEFAN, 68163 Mannheim (DE); GANDHI, DANESH, 68163 Mannheim (DE)
(74) Vertreter: Dehnhardt, Florian Christopher

(57) **Zusammenfassung**

Bei einem Verfahren zur Positionsbestimmung eines Arbeitsfahrzeugs (10) in einer Siloanlage ist vorgesehen, dass mittels einer dem Arbeitsfahrzeug (10) zugeordneten Erfassungseinrichtung (20) wenigstens ein ortsfestes Identifikationsmerkmal (44) erfasst sowie ausgehend von dem erfassten Identifikationsmerkmal (44) von einer Kontrolleinheit (14) aus einem Datenspeicher (22, 24) eine diesem zugeordnete Position in Bezug auf eine vorbestimmte Referenzposition (74) innerhalb der aus einer Vielzahl von Flachsilos (52) bestehenden Siloanlage ausgelesen wird, wobei mittels der Erfassungseinrichtung (20) zusätzlich eine räumliche Lage des Arbeitsfahrzeugs (10) gegenüber dem Identifikationsmerkmal (44) ermittelt sowie durch Vergleich mit der ausgelesenen Position des Identifikationsmerkmals (44) in Bezug zur vorbestimmten Referenzposition (74) gesetzt und als aktuelle Position des Arbeitsfahrzeugs (10) über eine Datenschnittstelle (18) ausgegeben wird.

## Beschreibung

Die Erfindung betrifft ein Verfahren zur Positionsbestimmung eines Arbeitsfahrzeugs in einer Siloanlage.

Die Herstellung und Lagerung von Silage, also fermentiertem Grüngut, das in der Nutztierhaltung der Fütterung insbesondere von Wiederkäuern oder auch Pferden dient, erfolgt meist in sogenannten Flachsilos. Diese bestehen aus einem durch Betonwände oder Holzschwellen umgrenzten Bereich, der zu einer Seite hin offen ist, sodass sich das Flachsilo mit einem Arbeitsfahrzeug zum Zwecke der Zufuhr bzw. Entnahme des Grünguts wie auch zu dessen gezielter Verteilung bzw. Verdichtung beim Anlegen des Flachsilos befahren lässt.

In größeren landwirtschaftlichen Betrieben ist es durchaus üblich, dass eine Vielzahl von Flachsilos zur Lagerung unterschiedlichster Materialen in einer Siloanlage zusammengefasst ist, wobei sich die Siloanlage häufig unter einem überdachten Bereich oder in einer Lagerhalle befindet, um die darin gelagerten Materialien vor Wettereinflüssen zu schützen. Ein schnelles Auffinden eines bestimmten Flachsilos bzw. Siloinhalts beim Befahren mit einem Arbeitsfahrzeug kann bei größeren Siloanalagen gerade für Mitarbeiter, die mit der Siloanlage nicht vertraut sind, erschwert sein.

Es ist daher Aufgabe der vorliegenden Erfindung, ein Verfahren der eingangs genannten Art anzugeben, das eine Orientierung innerhalb einer aus einer Vielzahl von Flachsilos bestehenden Siloanlage beim Befahren mit einem Arbeitsfahrzeug vereinfacht.

Diese Aufgabe wird durch ein Verfahren mit den Merkmalen des Patentanspruchs 1 gelöst.

Das Verfahren zur Positionsbestimmung eines Arbeitsfahrzeugs in einer Siloanlage sieht vor, dass mittels einer dem Arbeitsfahrzeug zugeordneten Erfassungseinrichtung wenigstens ein ortsfestes Identifikationsmerkmal erfasst sowie ausgehend von dem erfassten Identifikationsmerkmal von einer Kontrolleinheit aus einem Datenspeicher eine diesem zugeordnete Position in Bezug auf eine vorbestimmte Referenzposition innerhalb der aus einer Vielzahl von Flachsilos bestehenden Siloanlage ausgelesen wird, wobei mittels der Erfassungseinrichtung zusätzlich eine räumliche Lage des Arbeitsfahrzeugs gegenüber dem Identifikationsmerkmal ermittelt sowie durch Vergleich mit der ausgelesenen Position des Identifikationsmerkmals in Bezug zur vorbestimmten Referenzposition gesetzt und als aktuelle Position des Arbeitsfahrzeugs über eine Datenschnittstelle ausgegeben wird. Insbesondere erfolgt die Bestimmung der aktuellen Position des Arbeitsfahrzeugs periodisch beim Befahren der Siloanlage, wobei der hierbei zurückgelegte Fahrtweg in dem mit der Kontrolleinheit in Verbindung stehenden Datenspeicher aufgezeichnet werden kann.

Die solchermaßen bestimmte und über die Datenschnittstelle ausgegebene Position vereinfacht eine Orientierung beim Befahren selbst größerer Siloanlagen. Auch erfolgt die Bestimmung unabhängig von äußeren Informationen, wie beispielsweise von GPS-Daten, die im Falle von Beeinträchtigungen des Satellitenempfangs nicht oder nur unvollständig zur Verfügung stehen. Dementsprechend spielt es keine Rolle, ob die Siloanlage sich im Freien befindet, oder aber unter einem überdachten Bereich bzw. in einer geschlossenen Lagerhalle untergebracht ist.

Bei dem Identifikationsmerkmal handelt es sich typischerweise um eine optische Markierung bzw. einen optischen Identifikationsmarker in Form eines QR-Codes, der auf einem Schild angebracht sein kann, oder um eine Funkbake. Bei Verwendung eines Schilds kann dieses an einer Silo- oder Gebäudestruktur bzw. freistehend an einem Gestell befestigt sein. Zur Erfassung des Identifikationsmerkmals kann hier eine Stereokamera, ein 3D-Scanner oder aber im Falle einer Funkbake ein entsprechender Funkempfänger dienen. Die Funkbake hat den Vorteil, dass diese gegenüber Staub- und Schmutzablagerungen bzw. baulichen Hindernissen, die die Sichtbarkeit optischer Markierungen beeinträchtigen können, weitgehend unempfindlich ist. Eine optische Markierung ist indes besonders preiswert herstellbar und im Falle einer Beschädigung leicht zu ersetzen. Die Erfassung der Lage des Arbeitsfahrzeugs gegenüber dem Identifikationsmerkmal erfolgt hierbei durch Auswertung der von der Stereokamera bzw. dem 3D-Scanner bereitgestellten Rauminformationen bzw. der vom Funkempfänger erfassten richtungs- bzw. entfernungsabhängigen Laufzeiten der von der Funkbake ausgesendeten Bakensignale.

Die Siloanlage besteht üblicherweise aus einer Vielzahl unterschiedlicher Flachsilos, in denen die unterschiedlichsten Materialien gelagert werden. Hierzu gehört zum Beispiel Silage, also zu silierendes Grüngut (gehäckselte Maispflanzen, stängelartiges Schnittgut wie Gras oder Luzerne), aber auch beliebiges anderes Lagergut (Saatgut, Düngergranulat, Streusalz). Durch entsprechende Platzierung bzw. Zuordnung einer ausreichenden Anzahl von Identifikationsmerkmalen innerhalb der Siloanlage ist eine umfassende räumliche Organisation der Flachsilos möglich, was die Auffindbarkeit eines bestimmten Flachsilos bzw. Siloinhalts vereinfacht, wie auch auf Grundlage der bestimmten aktuellen Position des Arbeitsfahrzeugs die Möglichkeit der Ausführung automatisierter Bearbeitungsfunktionen eröffnet. Zu letzteren gehören Assistenzfunktionen, die insbesondere die Zufuhr bzw. Entnahme von Material mittels eines Front- oder Schaufelladers, aber auch die Durchführung eines Verteil- und Verdichtungsvorgangs beim Anlegen des Flachsilos mittels eines an einem landwirtschaftlichen Traktor angebrachten Schiebeschilds unterstützen. Hierbei können zur genauen Planung bzw. Durchführung des Verteil- und Verdichtungsvorgangs bereits bearbeitete Bereiche durch Einbeziehung des im Datenspeicher aufgezeichneten Fahrtwegs berücksichtigt werden. Sind mehrere Identifikationsmerkmale vorhanden, so lässt sich durch Datenfusion die Genauigkeit der Positionsbestimmung nicht nur weiter erhöhen, sondern durch deren intelligente Platzierung unter Berücksichtigung der baulichen Gegebenheiten auch sicherstellen, dass stets zumindest eines der Identifikationsmerkmale im Sicht- bzw. Empfangsbereich der Erfassungseinrichtung liegt.

Vorteilhafte Weiterbildungen des erfindungsgemäßen Verfahrens gehen aus den Unteransprüchen hervor.

Vorzugsweise erfolgt die Ausgabe der aktuellen Position des Arbeitsfahrzeugs in lokalen Koordinaten relativ zur vorbestimmten Referenzposition. Dies erlaubt die Verwendung eines für die jeweilige Siloanlage spezifischen und frei konfigurierbaren Koordinatensystems, sodass den jeweiligen räumlichen Gegebenheiten der Siloanlage vom Anwender entsprechend Rechnung getragen werden kann. Zur Konfiguration kann hierbei über ein berührungsempfindliches Display erfolgen, das von einer mit der Kontrolleinheit in Verbindung stehenden Nutzerschnittstelle umfasst ist.

Weiterhin besteht die Möglichkeit, dass die von der Kontrolleinheit ausgegebene aktuelle Position des Arbeitsfahrzeugs in globale Koordinaten transformiert wird. Die Auswahl eines entsprechenden Koordinatensystems, wie es von einem im Arbeitsfahrzeug vorhandenen GPS-Navigationssystem verwendet wird, kann vom Anwender über das berührungsempfindliche Display der Nutzerschnittstelle erfolgen. In diesem Fall lässt sich sowohl innerhalb wie auch außerhalb der Siloanlage ein und das selbe Koordinatensystem nutzen.

Hierbei ist es denkbar, dass die transformierte aktuelle Position des Arbeitsfahrzeugs zur Korrektur von Ortungsabweichungen des GPS-Navigationssystems herangezogen wird. Dies erlaubt es, eine Positionsbestimmung des Arbeitsfahrzeugs innerhalb der Siloanlage auf Grundlage von mittels des GPS-Navigationssystems empfangenen GPS-Daten vorzunehmen, selbst wenn diese im Falle von Beeinträchtigungen des Satellitenempfangs zeitweise nicht oder nur unvollständig zur Verfügung stehen. Auch wird die Ortungsgenauigkeit bei Fahrten außerhalb der Siloanlage entsprechend mitverbessert.

Auch kann vorgesehen sein, dass dem Identifikationsmerkmal wenigstens ein Ordnungskriterium eines damit gekennzeichneten Flachsilos innerhalb der Siloanlage, insbesondere hinsichtlich einer Siloreferenzposition, eines Siloinhalts (Typ und Qualität des darin gelagerten Materials), einer Silocharakteristik (Verdichtungszustand, Füllniveau, Materialverteilung, Verdichtungsverlauf), der Art durchgeführter Bearbeitungsmaßnahmen (Zufuhr, Entnahme, Verteilung, Verdichtung), eines Bearbeitungszeitpunkts (Uhrzeit, Tag, Monat, Jahr) und/oder weiterer Kriterien (Name des Bearbeiters, verwendete Maschinen) zugeordnet ist. Die betreffenden Ordnungskriterien dienen der besseren Übersicht über die Siloanlage und können in dem mit der Kontrolleinheit in Verbindung stehenden Datenspeicher hinterlegt sein. Hierbei erlaubt es insbesondere die Kenntnis der jeweiligen Siloreferenzposition, den Fahrer des Arbeitsfahrzeugs zu einem von ihm (auf Grundlage der Ordnungskriterien) ausgewählten Flachsilo innerhalb der Siloanlage durch Ausgabe entsprechender Fahranweisungen über das von der Nutzerschnittstelle umfasste berührungsempfindliche Display zu navigieren.

Um die Genauigkeit der Positionsbestimmung weiter zu verbessern, kann die Ermittlung der räumlichen Lage des Arbeitsfahrzeugs gegenüber dem Identifikationsmerkmal von der Kontrolleinheit hinsichtlich einer sensorisch erfassten Fehlwinkelstellung des Arbeitsfahrzeugs kompensiert werden. Die sensorische Erfassung der Fehlwinkelstellung erfolgt zum Beispiel mittels einer in dem Arbeitsfahrzeug angeordneten Inertialen Messeinheit (IMU - Inertial Measurement Unit) durch Messung eines Nickens um eine Querachse und/oder eines Rollens um eine Längsachse des Arbeitsfahrzeugs.

Das erfindungsgemäße Verfahren wird im Folgenden anhand der beigefügten Zeichnungen näher erläutert. Es zeigen:
- Fig. 1: ein Ausführungsbeispiel des erfindungsgemäßen Verfah-rens zur Positionsbestimmung eines als landwirtschaft-licher Traktor ausgebildeten Arbeitsfahrzeugs in einer Siloanlage,
- Fig. 2: eine beispielhafte Anordnung zur Durchführung des in Fig. 1 wiedergegebenen Verfahrens, und
- Fig. 3: eine aus einer Vielzahl von Flachsilos bestehende Siloanlage.

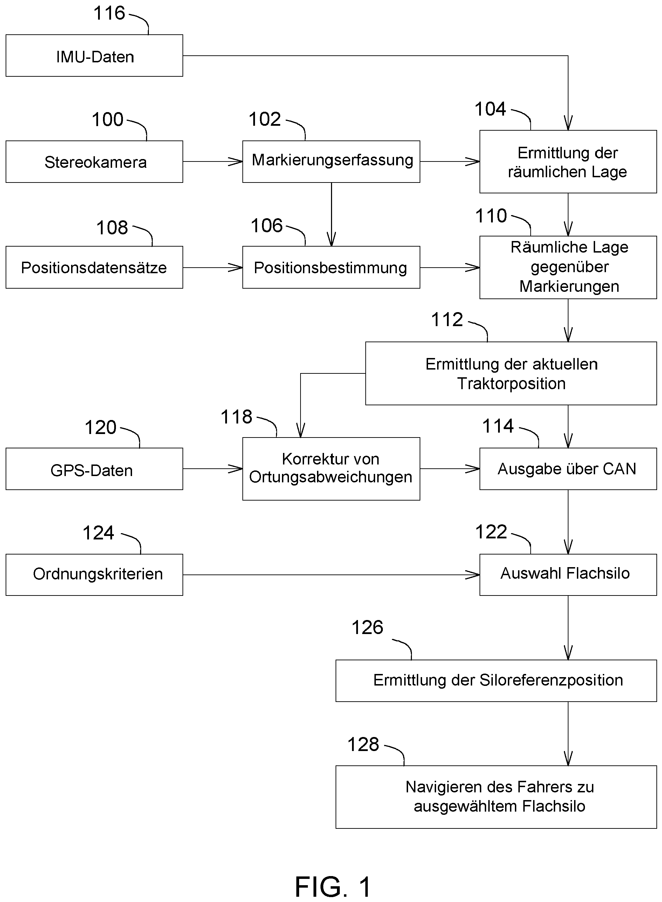

Fig. 1 zeigt ein als Flussdiagramm wiedergegebenes Ausführungsbeispiel des erfindungsgemäßen Verfahrens zur Positionsbestimmung eines als landwirtschaftlicher Traktor ausgebildeten Arbeitsfahrzeugs in einer Siloanlage.

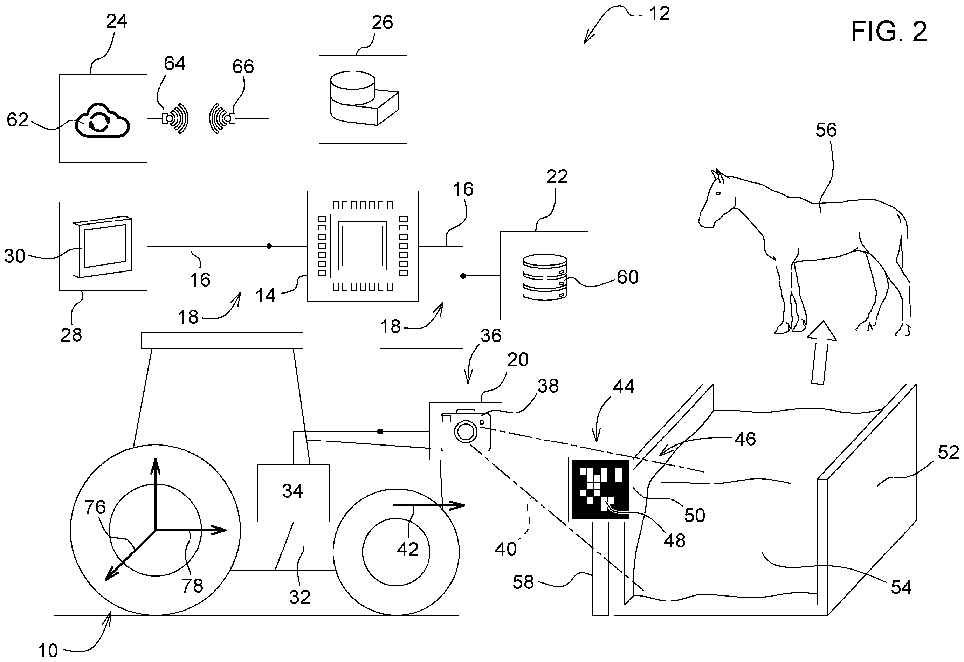

Zum besseren Verständnis soll zunächst auf die in Fig. 2 schematisch dargestellte Anordnung eingegangen werden, die zur Durchführung des Verfahrens gemäß Fig. 1 dient.

Die in dem landwirtschaftlichen Traktor 10 befindliche Anordnung 12 weist eine mikroprozessorgesteuerte Kontrolleinheit 14 auf, die über eine als CAN-Datenbus 16 ausgebildete Datenschnittstelle 18 mit einer Erfassungseinrichtung 20, einem ersten Datenspeicher 22, einem zweiten Datenspeicher 24, einem GPS-Navigationssystem 26, einer Nutzerschnittstelle 28 mit einem berührungsempfindlichen Display 30 sowie einer an einem Traktorchassis 32 fest angebrachten Inertialen Messeinheit 34 (IMU - Inertial Measurement Unit) in Verbindung steht.

Bei der Erfassungseinrichtung 20 handelt es sich um eine dem Frontbereich 36 des landwirtschaftlichen Traktors 10 zugeordnete Stereokamera 38, deren Sicht- bzw. Empfangsbereich 40 in Richtung einer Vorwärtsfahrtbewegung 42 des landwirtschaftlichen Traktors 10 orientiert ist, um ein ortsfestes Identifikationsmerkmal 44 zu erfassen, bei dem es sich vorliegend um eine optische Markierung bzw. einen optischen Identifikationsmarker 46 in Form eines QR-Codes 48 handelt, der auf einem Schild 50 angebracht ist, das sich beispielhaft neben einem Flachsilo 52 befindet, in dem beispielhaft Silage 54 zur Fütterung von Wiederkäuern oder auch Pferden 56 gelagert ist. Das Schild 50 ist an einer Silo- oder Gebäudestruktur bzw. (wie hier) freistehend an einem Gestell 58 befestigt. Es sei angemerkt, dass zur Erfassung des Identifikationsmerkmals 44 anstelle einer Stereokamera 38 auch ein 3D-Scanner oder dergleichen Verwendung finden kann.

Wie ferner in Fig. 2 zu erkennen ist, ist der erste Datenspeicher 22 durch einen lokalen Speicher 60, der zweite Datenspeicher 24 hingegen durch einen externen (cloudbasierten) Datenserver 62 gebildet, wobei letzterer über eine drahtlose Kommunikationsschnittstelle 64, 66 mit der Kontrolleinheit 14 in Verbindung steht.

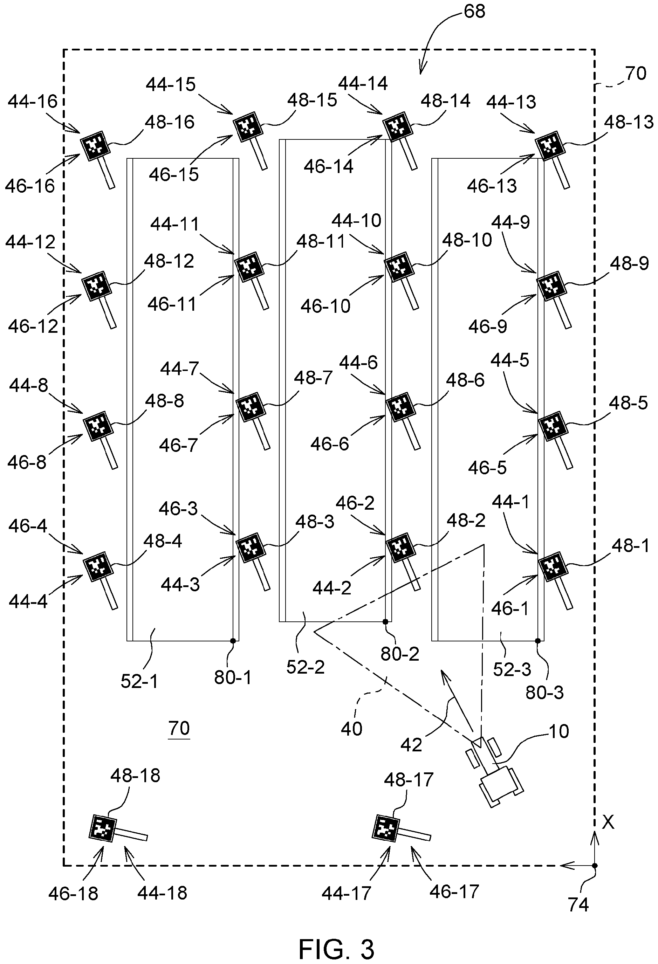

Fig. 3 zeigt eine aus einer Vielzahl von Flachsilos 52-1, 52-2, 52-3 bestehende Siloanlage 68. Die Siloanlage 68 ist unter einem überdachten Bereich oder in einer geschlossenen Lagerhalle 70 untergebracht, um die in den Flachsilos 52-1, 52-2, 52-3 gelagerten Materialien vor Wettereinflüssen zu schützen. Alternativ kann sich die Siloanlage 68 aber auch im Freien befinden.

Jedes der Flachsilos 52-1, 52-2, 52-3 besteht aus einem durch Betonwände oder Holzschwellen umgrenzten Bereich, der zu einer Seite hin offen ist, sodass sich das Flachsilo 52-1, 52-2, 52-3 mit dem landwirtschaftlichen Traktor 10 zum Zwecke der Entnahme und Zufuhr von Material wie auch zu dessen gezielter Verteilung bzw. Verdichtung befahren lässt. Hierzu wird an dem landwirtschaftlichen Traktor 10 ein Frontlader oder ein Schiebeschild angebracht (nicht gezeigt).

In den Flachsilos 52-1, 52-2, 52-3 werden die unterschiedlichsten Materialien gelagert. Hierzu gehört zum Beispiel Silage, also zu silierendes Grüngut (gehäckselte Maispflanzen, stängelartiges Schnittgut wie Gras oder Luzerne), aber auch beliebiges anderes Lagergut (Saatgut, Düngergranulat, Streusalz) .

Im Unterschied zur Darstellung in Fig. 1 sind innerhalb des gesamten überdachten Bereichs bzw. der geschlossenen Lagerhalle 70 entlang der Flachsilos 52-1, 52-2, 52-3 sowie eines zum Rangieren des landwirtschaftlichen Traktors 10 vorgesehenen Vorplatzes 72 eine Vielzahl von Identifikationsmerkmalen 44-1 bis 44-18 in Form von optischen Markierungen bzw. optischen Identifikationsmarkern 46-1 bis 46-18 mit jeweils individuellem QR-Code 48-1 bis 48-18 angebracht bzw. aufgestellt. Die Identifikationsmerkmale 44-1 bis 44-18 sind unter Beachtung der baulichen Gegebenheiten derart platziert, dass stets zumindest eines der Identifikationsmerkmale 44-1 bis 44-18 im Sicht- bzw. Empfangsbereich 40 der Erfassungseinrichtung 20 liegt, solange sich der landwirtschaftliche Traktor 10 innerhalb der Siloanlage 68 befindet. Im vorliegenden Beispiel sind dies die Identifikationsmerkmale 44-1, 44-2, 44-3.

Alternativ sind die Identifikationsmerkmale 44-1 bis 44-18 als Funkbaken ausgebildet. Bei der Erfassungseinrichtung 20 handelt es sich dann um einen dem Frontbereich 36 des landwirtschaftlichen Traktors 10 zugeordneten Funkempfänger (nicht gezeigt). Funkbaken haben den Vorteil, dass diese gegenüber Staub- und Schmutzablagerungen bzw. baulichen Hindernissen, die die Sichtbarkeit optischer Markierungen beeinträchtigen können, weitgehend unempfindlich sind. Optische Markierungen sind indes besonders preiswert herstellbar und im Falle einer Beschädigung leicht zu ersetzen.

Bei dem von der Kontrolleinheit 14 ausgeführten und in dem lokalen Speicher 60 als entsprechender Programmcode hinterlegten Verfahren wird gemäß Fig. 1 in einem ersten Hauptschritt 100 die Erfassungseinrichtung 20 unter Durchführung eines Selbsttests in Betrieb genommen, um in einem zweiten Hauptschritt 102 die in ihrem Sicht- bzw. Empfangsbereich 40 liegenden Identifikationsmerkmale 44-1, 44-2, 44-3 zu erfassen sowie in einem dritten Hauptschritt 104 zusätzlich eine räumliche Lage des landwirtschaftlichen Traktors 10 gegenüber jedem der erfassten Identifikationsmerkmale 44-1, 44-2, 44-3 zu ermitteln. Dies erfolgt durch Auswertung der von der Stereokamera 38 bzw. dem 3D-Scanner bereitgestellten Rauminformationen bzw. der vom Funkempfänger erfassten richtungs- bzw. entfernungsabhängigen Laufzeiten der von den Funkbaken ausgesendeten Bakensignale.

In einem vierten Hauptschritt 106 wird von der Kontrolleinheit 14 ausgehend von den im zweiten Hauptschritt 102 erfassten Identifikationsmerkmalen 44-1, 44-2, 44-3 eine diesen jeweils zugeordnete Position in Bezug auf eine vorbestimmte Referenzposition 74 innerhalb der Siloanlage 68 ermittelt, was durch Auslesen eines in dem lokalen Speicher 60 bzw. dem externen Datenserver 62 hinterlegten Datensatzes in einem ersten Nebenschritt 108 erfolgt. Der Datensatz wird hierbei im Rahmen der Platzierung bzw. Anbringung der Identifikationsmerkmale 44-1 bis 44-18 angelegt, wozu deren jeweilige Position in Bezug auf die gewählte Referenzposition 74 unter Verwendung geeigneter Mittel bestimmt wird.

Hierauf wird von der Kontrolleinheit 14 die im dritten Hauptschritt 104 jeweils ermittelte räumliche Lage des landwirtschaftlichen Traktors 10 gegenüber den erfassten Identifikationsmerkmalen 44-1, 44-2, 44-3 in einem fünften Hauptschritt 110 durch Vergleich mit der ausgelesenen Position des betreffenden Identifikationsmerkmals 44-1, 44-2, 44-3 in Bezug zur vorbestimmten Referenzposition 74 gesetzt und in einem sechsten Hauptschritt 112 als aktuelle Position des landwirtschaftlichen Traktors 10 über den CAN-Datenbus 16 in einem siebten Hauptschritt 114 ausgegeben. Dies erfolgt für jedes der erfassten Identifikationsmerkmale 44-1, 44-2, 44-3 separat, wobei durch Datenfusion sich die Genauigkeit der Positionsbestimmung weiter erhöhen lässt. Die solchermaßen bestimmte Position kann hierbei auf eine beliebige Stelle am landwirtschaftlichen Traktor 10 bezogen sein, bevorzugt jedoch auf dessen Schwerpunkt in unbeladenem Zustand bzw. die Lage der Inertialen Messeinheit 34.

Zusätzlich wird im dritten Hauptschritt 104 die Ermittlung der räumlichen Lage des landwirtschaftlichen Traktors 10 gegenüber den erfassten Identifikationsmerkmalen 44-1, 44-2, 44-3 von der Kontrolleinheit 14 hinsichtlich einer sensorisch erfassten Fehlwinkelstellung des landwirtschaftlichen Traktors 10 kompensiert. Die sensorische Erfassung der Fehlwinkelstellung erfolgt in einem zweiten Nebenschritt 116 mittels der in dem landwirtschaftlichen Traktor 10 angeordneten Inertialen Messeinheit 34 durch Messung eines Nickens um eine Querachse 76 und/oder eines Rollens um eine Längsachse 78 des landwirtschaftlichen Traktors 10.

Die Ausgabe bzw. Bereitstellung der aktuellen Position des landwirtschaftlichen Traktors 10 erfolgt im siebten Hauptschritt 114 in lokalen Koordinaten relativ zur vorbestimmten Referenzposition 74. Zugrunde liegt die Verwendung eines für die jeweilige Siloanlage 68 spezifischen und frei konfigurierbaren Koordinatensystems, sodass den jeweiligen räumlichen Gegebenheiten der Siloanlage 68 vom Anwender entsprechend Rechnung getragen werden kann. Die Konfiguration erfolgt hierbei über das berührungsempfindliche Display 30 der mit der Kontrolleinheit 14 in Verbindung stehenden Nutzerschnittstelle 28.

Ergänzend wird im siebten Hauptschritt 114 die von der Kontrolleinheit 14 ausgegebene aktuelle Position des landwirtschaftlichen Traktors 10 in globale Koordinaten transformiert. Die Auswahl eines entsprechenden Koordinatensystems, das zugleich von dem im landwirtschaftlichen Traktor 10 vorhandenen GPS-Navigationssystem 26 verwendet wird, kann vom Anwender über das berührungsempfindliche Display 30 der Nutzerschnittstelle 28 erfolgen. In diesem Fall lässt sich sowohl innerhalb wie auch außerhalb der Siloanlage 68 ein und das selbe Koordinatensystem nutzen.

Die solchermaßen transformierte aktuelle Position des landwirtschaftlichen Traktors 10 wird in einem dritten Nebenschritt 118 zusätzlich zur Korrektur von Ortungsabweichungen des GPS-Navigationssystems 26 herangezogen. Dies erlaubt es, eine Positionsbestimmung des landwirtschaftlichen Traktors 10 innerhalb der Siloanlage 68 auf Grundlage von mittels des GPS-Navigationssystems 26 in einem vierten Nebenschritt 120 empfangenen GPS-Daten vorzunehmen, selbst wenn diese im Falle von Beeinträchtigungen des Satellitenempfangs zeitweise nicht oder nur unvollständig zur Verfügung stehen. Auch wird die Ortungsgenauigkeit bei Fahrten außerhalb der Siloanlage 68 entsprechend mitverbessert.

Die Durchführung des in Fig. 1 wiedergegebenen Verfahrens und damit die Bestimmung der aktuellen Position des landwirtschaftlichen Traktors 10 erfolgt periodisch beim Befahren der Siloanlage 68, wobei der hierbei zurückgelegte Fahrtweg in dem mit der Kontrolleinheit 14 in Verbindung stehenden lokalen Speicher 60 aufgezeichnet wird.

Darüber hinaus ist den entlang der Flachsilos 52-1, 52-2, 52-3 angebrachten bzw. aufgestellten Identifikationsmerkmalen 44-1, 44-2, 44-3 wenigstens ein Ordnungskriterium eines damit gekennzeichneten Flachsilos 52-1, 52-2, 52-3 innerhalb der Siloanlage 68, insbesondere hinsichtlich einer Siloreferenzposition 80-1, 80-2, 80-3, eines Siloinhalts (Typ und Qualität des darin gelagerten Materials), einer Silocharakteristik (Verdichtungszustand, Füllniveau, Materialverteilung, Verdichtungsverlauf), der Art durchgeführter Bearbeitungsmaßnahmen (Zufuhr, Entnahme, Verteilung, Verdichtung), eines Bearbeitungszeitpunkts (Uhrzeit, Tag, Monat, Jahr) und/oder weiterer Kriterien (Name des Bearbeiters, verwendete Maschinen) zugeordnet. Die betreffenden Ordnungskriterien dienen der besseren Übersicht über die Siloanlage 68 und sind als entsprechender Datensatz im lokalen Speicher 60 bzw. externen Datenserver 62 hinterlegt. In einem achten Hauptschritt 122 hat der Fahrer des landwirtschaftlichen Traktors 10 die Möglichkeit, auf Grundlage der in einem fünften Nebenschritt 124 bereitgestellten Ordnungskriterien ein bestimmtes der Flachsilos 52-1, 52-2, 52-3 auszuwählen, dessen Siloreferenzposition 80-1, 80-2, 80-3 daraufhin in einem nachfolgenden neunten Hauptschritt 126 ermittelt wird. Die Kenntnis der jeweiligen Siloreferenzposition 80-1, 80-2, 80-3 bildet in Verbindung mit der im siebten Hauptschritt 114 ausgegebenen bzw. bereitgestellten aktuellen Position des landwirtschaftlichen Traktors 10 die Grundlage dafür, den Fahrer des landwirtschaftlichen Traktors 10 in einem zehnten Hauptschritt 128 zu dem ausgewählten Flachsilo 52-1, 52-2, 52-3 innerhalb der Siloanlage 68 durch Ausgabe entsprechender Fahranweisungen über das von der Nutzerschnittstelle 28 umfasste berührungsempfindliche Display 30 zu navigieren.

Durch entsprechende Platzierung bzw. Zuordnung einer ausreichenden Anzahl von Identifikationsmerkmalen 44-1 bis 44-18 innerhalb der Siloanlage 68 ist eine umfassende räumliche Organisation der Flachsilos 52-1, 52-2, 52-3 möglich, sodass sich auf Grundlage der im siebten Hauptschritt 114 ausgegebenen bzw. bereitgestellten aktuellen Position des landwirtschaftlichen Traktors 10 nicht nur die Auffindbarkeit eines bestimmten Flachsilos 52-1, 52-2, 52-3 bzw. Siloinhalts vereinfachen lässt, sondern auch die Möglichkeit der Ausführung automatisierter Bearbeitungsfunktionen besteht. Zu letzteren gehören Assistenzfunktionen, die insbesondere die Zufuhr bzw. Entnahme von Material, aber auch die Durchführung eines Verteil- und Verdichtungsvorgangs beim Anlegen des Flachsilos 52-1, 52-2, 52-3 unterstützen. Hierbei lassen sich zur genauen Planung bzw. Durchführung des Verteil- und Verdichtungsvorgangs bereits bearbeitete Bereiche durch Einbeziehung des im lokalen Speicher 60 aufgezeichneten Fahrtwegs berücksichtigen.

## Patentansprüche

1. Verfahren zur Positionsbestimmung eines Arbeitsfahrzeugs in einer Siloanlage, bei dem mittels einer dem Arbeitsfahrzeug (10) zugeordneten Erfassungseinrichtung (20) wenigstens ein ortsfestes Identifikationsmerkmal (44) erfasst sowie ausgehend von dem erfassten Identifikationsmerkmal (44) von einer Kontrolleinheit (14) aus einem Datenspeicher (22, 24) eine diesem zugeordnete Position in Bezug auf eine vorbestimmte Referenzposition (74) innerhalb der aus einer Vielzahl von Flachsilos (52) bestehenden Siloanlage (68) ausgelesen wird, wobei mittels der Erfassungseinrichtung (20) zusätzlich eine räumliche Lage des Arbeitsfahrzeugs (10) gegenüber dem Identifikationsmerkmal (44) ermittelt sowie durch Vergleich mit der ausgelesenen Position des Identifikationsmerkmals (44) in Bezug zur vorbestimmten Referenzposition (74) gesetzt und als aktuelle Position des Arbeitsfahrzeugs (10) über eine Datenschnittstelle (18) ausgegeben wird.

2. Verfahren nach Anspruch 1, **dadurch gekennzeichnet, dass** die Ausgabe der aktuellen Position des Arbeitsfahrzeugs (10) in lokalen Koordinaten relativ zur vorbestimmten Referenzposition (74) erfolgt.

3. Verfahren nach Anspruch 1 oder 2, **dadurch gekennzeichnet, dass** die von der Kontrolleinheit (14) ausgegebene aktuelle Position des Arbeitsfahrzeugs (10) in globale Koordinaten transformiert wird.

4. Verfahren nach Anspruch 3, **dadurch gekennzeichnet, dass** die transformierte aktuelle Position des Arbeitsfahrzeugs (10) zur Korrektur von Ortungsabweichungen des GPS-Navigationssystems (26) herangezogen wird.

5. Verfahren nach wenigstens einem der vorhergehenden Ansprüche, **dadurch gekennzeichnet, dass** dem Identifikationsmerkmal (44) wenigstens ein Ordnungskriterium eines damit gekennzeichneten Flachsilos (52) innerhalb der Siloanlage (68) zugeordnet ist.

6. Verfahren nach wenigstes einem der vorhergehenden Ansprüche, **dadurch gekennzeichnet, dass** die Ermittlung der räumlichen Lage des Arbeitsfahrzeugs (10) gegenüber dem Identifikationsmerkmal (44) von der Kontrolleinheit (14) hinsichtlich einer sensorisch erfassten Fehlwinkelstellung des Arbeitsfahrzeugs (10) kompensiert wird.
